(19) Europäisches Patentamt
European Patent Office
Office européen des brevets

(11) **EP 4 273 533 A1**

(12) **EUROPEAN PATENT APPLICATION**

(43) Date of publication:
**08.11.2023   Bulletin 2023/45**

(21) Application number: **22172138.4**

(22) Date of filing: **06.05.2022**

(51) International Patent Classification (IPC):
**G01N 3/06** *(2006.01)*      **G01N 3/42** *(2006.01)*

(52) Cooperative Patent Classification (CPC):
**G01N 3/068; G01N 3/42;** G01N 2203/0641

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Max-Planck-Gesellschaft zur Förderung der Wissenschaften e.V.**
**80539 München (DE)**

(72) Inventors:
• **Amini, Shahrouz**
 **14476 Potsdam-Golm (DE)**
• **Fratzl, Peter**
 **14476 Potsdam-Golm (DE)**

(74) Representative: **v. Bezold & Partner Patentanwälte - PartG mbB**
**Ridlerstraße 57**
**80339 München (DE)**

(54) **STRAIN MEASUREMENT APPARATUS AND METHOD FOR MEASURING MECHANICAL STRAIN**

(57)   A strain measurement apparatus 100 for measuring mechanical strain in a sample 1 comprises a sample holder device 10 being arranged for accommodating the sample 1 to be investigated, an indenter device 20 including an indenter tip 21 and an actuator stage 22 carrying the indenter tip 21, wherein the actuator stage 22 is arranged for an application of a localized mechanical load along a load axis $z_1$ via the indenter tip 21 at an indentation zone 2 of the sample 1 accommodated by the sample holder device 10, when the sample holder device 10 is in a load application position, a confocal Raman microscopy device 30 having an imaging axis $z_2$ and being arranged for collecting at least one Raman spectrum in the indentation zone 2 of the sample 1, and a calculation device 40 being arranged for calculating at least one strain parameter based on the at least one Raman spectrum, wherein the sample holder device 10, the indenter device 20 and the confocal Raman microscopy device 30 are arranged such that the confocal Raman microscopy device 30 is capable of collecting the at least one Raman spectrum, while the sample holder device 10 is in the load application position, and the indenter device 20 and the confocal Raman microscopy device 30 are arranged such that the load axis $z_1$ of the actuator stage 22 and the imaging axis $z_2$ of the confocal Raman microscopy device 30 coincide. Furthermore, a strain measurement method for measuring mechanical strain in a sample 1 is described.

FIG. 1

**Description**

Field of the invention

The invention relates to a strain measurement apparatus, being configured for measuring mechanical strain in a sample, in particular in a laser transparent sample. Furthermore, the invention relates to a strain measurement method for measuring mechanical strain in a sample. The strain measurement is based on combining confocal Raman spectroscopy and indentation. Applications of the invention are available e. g. in the fields of material sciences and material investigations.

Technical background

In the present specification, reference is made to the following prior art illustrating the technical background of the invention and related techniques:

> [1] A. M. Korsunsky. Chapter 8 - Residual Stress "Measurement". In: A Teaching Essay on Residual Stresses and Eigenstrains (eds Korsunsky AM). Butterworth-Heinemann (2017);
> [2] W. Ecker et al. "Nanoscale evolution of stress concentrations and crack morphology in multilayered CrN coating during indentation: Experiment and simulation" in "Materials & Design" 188, 108478 (2020);
> [3] A. J.G. Lunt et al. "A review of micro-scale focused ion beam milling and digital image correlation analysis for residual stress evaluation and error estimation" in "Surface and Coatings Technology" 283, 373-388, 2015;
> [4] C. Gammer et al. "Measurement of local strain" in "MRS Bulletin" 44(6), 459-464, 2019;
> [5] J. Gim et al. "Nanoscale deformation mechanics reveal resilience in nacre of Pinna nobilis shell" in "Nat Commun" 10, 4822 (2019);
> [6] A. Zeilinger et al. "In-situ Observation of Cross-Sectional Microstructural Changes and Stress Distributions in Fracturing TiN Thin Film during Nanoindentation" in "Scientific Reports" 6, 22670 (2016);
> [7] P. Manimunda et al. in "Chem. Commun." 2019, 55, 9200-9203; and
> [8] H. C. Loh et al. in "Commun Mater" 1, 77 (2020).

Localized stresses often define the performance or failure of solid materials. Therefore, studying the evolution of localized stresses is an essential element for understanding the mechanical response of materials. Localized stresses are determined by applied stresses, residual stresses, and their interactions. While the applied stresses can be measured and controlled, the residual stresses are inherently difficult to be detected, controlled or restrained. Over the last decades, several techniques have been developed to evaluate internal strain or stress.

Micro-scale focused ion beam milling and digital image correlation analysis is a destructive technique which provides a direct measurement of the residual strains at sample surface. However, it is limited to the assessment of the residual strains and is not applicable to induced contact strains, wherein the external contact loads are present. In addition, mechanical milling eventually destroys the region of interest. Moreover, digital image correlation cannot provide volumetric information and is limited to the surface areas.

As non-destructive techniques, transmission electron diffraction and microscopy techniques allow a determination of local lattice strains at high spatial resolutions down to a few nanometers (see e. g. [4, 5]). However, transmission electron microscopes (TEMs) require rather thin specimens, which is a drawback as samples have a given thickness and the resolution must be assessed in terms of a volume giving rise to a single strain value. Strain-relaxation effects can be induced during sample preparation, and free edge effects during in-situ mechanical loadings can result. In addition, the field of view in TEM methods is limited to a few micrometres and the technique does not support 3D characterizations.

Microfocus X-ray diffraction is another known technique for real-time strain/stress measurements with micron-size probing resolution [1]. However, this technique requires a complex measuring technique, like an advanced synchrotron beamline, and, similar to the electron diffraction techniques, X-ray diffraction comes with its own drawbacks for sample preparation with restricted sizes, in which the free surfaces of the sample can induce or relax the residual stress/strain at the sample [1, 2]. Again, the applied mechanical loads may result in excess deformations at the free edges of the sample. Consequently, the collected data from the illuminated volume contains the information from the deformations at the sample edges, which results in inevitable measuring errors. Finally, the transmission concept of the X-ray diffraction measurement results in information obtained from the illuminated volume rather than point-specific data. Thus, the technique is not capable of depth profiling along an illumination axis and a volume giving rise to a single strain value.

Raman spectroscopy is capable of probing molecular energetic characteristics of Raman active materials. Besides its capability for structural material characterization, the technique also has been used for measuring mechanical strains/stresses. Such strains influence the frequencies of molecular vibrations, and consequently, the Raman spectra by means of changes in peak position and width. Thus, by measuring the positions and/or widths of the vibrational bands of a strained sample and comparing them with their unstrained state (reference state), information regarding the magnitude of the mechanical strains/stresses can be obtained. In contrast to the diffraction techniques, confocal Raman spectroscopy allows depth profiling within the penetration depth of materials. This penetration depth is a function of laser wavelength and absorption coefficient of the sample, and for laser transparent materials can be in a range of millimeters. Accordingly, the sample thickness allows the development and propagation of the strain/stress fields in the absence of free/cut edges.

Known protocols to investigate the loaded/indented samples comprise post indentation Raman spectroscopy and off axis Raman spectroscopy under applied load. With post indentation Raman spectroscopy, first, the sample is indented and after indentation, residual impressions are being scanned. As an example, an integrated indentation setup has been proposed in [7], wherein a translation stage moves the sample from an indentation station to a separate measuring station (optic position) which is connected to a Raman spectrometer via a fiber optic cable. However, this method is not capable of real-time measurements. It does not allow studying elastic responses (induced elastic strains) since they will recover as soon as the sample is unloaded.

On the other hand, off axis Raman spectroscopy under applied load employs Raman spectroscopy while the sample is loaded. However, the off-axis coincident of the incident laser with applied load does not allow an in-line scan beneath the loading spot (i. e. no measurement in sample volume) implying further complexities for calculation of the strain tensors. Furthermore, with available in-situ Raman indentation setups including off axis characterization of the sample, part of the induced strain field will not be accessible for Raman microscopy as it is in the shadow of the indenter. In addition, since the intensity of the vibration bands varies with the probing direction, the tilt angle of the setup induces further complexity to the data analysis. Off-axis Raman spectroscopy has been done on pulled/compressed samples (rather than indented) [8]. However, since a distributed loading results in distributed strains, the technique does not allow studying the development of the strains at the loaded areas (since architecture materials such as biological ceramics does not or correlate them with the microarchitectural organization of the sample, which can play a key role in the development of concentrated stresses/strains.

In summary, the conventional assessment of localized stresses under applied loads has been quite challenging as the following two key aspects are to be combined. Firstly, capability for "time-resolved" measurement of developing strain/stress fields under applied loads and the interactions with possible residual strains/stresses. Hence, destructive techniques cannot fulfill this requirement. With this, only non-destructive strain/stress measurement techniques, e. g. based on diffraction measurements remain as practical options. Secondly, ability to probe the "localized" strains/strains with submicron resolution. Hence, synchrotron X-ray microdiffraction, transmission electron diffraction and microscopy, and confocal Raman microscopy [1, 2] remain as only feasible techniques for time-resolved measurement of localized strains/stresses under contact loads.

However, due to physical constraints, so far, none of these techniques in their known configurations is capable of three-dimensional mapping of the induced contact strains/stresses fields.

Objective of the invention

It is an objective of the invention to provide an improved strain measurement apparatus and/or strain measurement method for measuring mechanical strain in a sample, being capable of avoiding limitations and disadvantages of conventional techniques. In particular, the strain measurement apparatus and/or method are to be capable of real time three-dimensional mapping and avoiding limitations resulting from a temporal and/or orientation offset.

Summary of the invention

The objective is solved by a strain measurement apparatus and/or a strain measurement method comprising the features of the independent claims. Advantageous embodiments and applications of the invention are defined in the dependent claims.

According to a first general aspect of the invention, the above objective is solved by a strain measurement apparatus, being configured for measuring mechanical strain in a sample, comprising a sample holder device being arranged for accommodating the sample to be investigated, an indenter device including an indenter tip and an actuator stage carrying the indenter tip, wherein the actuator stage is arranged for an application of a localized mechanical load along a load axis via the indenter tip at an indentation zone of the sample accommodated by the sample holder device, when the sample holder device is in a load application position, a confocal Raman microscopy device (preferably a confocal Raman microscope) having an imaging axis and being arranged for collecting at least one Raman spectrum in the indentation zone of the sample, and a calculation device being arranged for calculating at least one strain parameter based on the at least one Raman spectrum.

According to the inventive apparatus, the sample holder device, the indenter device and the confocal Raman microscopy device are arranged such that the confocal Raman microscopy device is capable of collecting the at least one Raman spectrum, while the sample holder device is in the load application position. Furthermore, according to the invention, the indenter device and the confocal Raman microscopy device are arranged such that the load axis (indentation direction) of the actuator stage and the imaging axis of the confocal Raman microscopy device coincide.

According to a second general aspect of the invention, the above objective is solved by a strain measurement method for measuring mechanical strain in a sample, comprising the steps arranging the sample to be investigated on a sample holder device, applying a localized mechanical load to the sample with an indenter device including an indenter tip and an actuator stage carrying the indenter tip, wherein the mechanical load is applied with the actuator stage along a load axis via the indenter tip at an indentation zone of the sample, when the sample holder device is in a load application position, collecting at least one Raman spectrum in the indentation zone of the sample with a confocal Raman microscopy device having an imaging axis, and calculating at least one strain parameter based on the at least one Raman spectrum.

According to the inventive method, the at least one Raman spectrum is collected, while the sample holder device is in the load application position. Furthermore, according to the invention, the indenter device and the confocal Raman microscopy device are arranged such that the load axis of the actuator stage and the imaging axis of the confocal Raman microscopy device coincide. Preferably, the strain measurement method according to the second general aspect of the invention or an embodiment thereof is executed with the strain measurement apparatus according to the first general aspect of the invention or an embodiment thereof.

The term "strain measurement" refers to determining strain, which is a measure of the deformation of a material under the effect of a force, in particular an external force. The deformation results in changes in molecular vibrational frequencies in the material. In an elastic deformation, the induced strains and stresses are correlated. Accordingly, the strain measurement apparatus and method of the invention also can be considered as a stress measurement apparatus and method for measuring mechanical stress in a sample, wherein at least one stress parameter is obtained by correlation with the changes in peak widths and/or positions of a collected Raman spectrum.

Providing the sample holder device in the load application position comprises arranging the sample holder device and the indenter device such, that the indenter tip is capable of contacting and pressing against the sample on the sample holder device by a displacement of the indenter tip. Preferably, the sample holder device and the indenter device have a fixed position relative to each other, so that the sample holder device is in the load application position during the whole strain measurement. The sample holder device preferably comprises a support platform with a surface on which the sample is placed. The support platform has sufficient mechanical stability for resisting any forces caused by the application of a localized mechanical load on the sample by the indenter tip. The support platform preferably is configured for passing probe light for collecting the at least one Raman spectrum, through a hole (window) in the platform for direct exposure of a stand-alone (thick) transparent sample or by employing a transparent backplate for supporting a thin sample (<1 mm). Particularly preferred, the sample holder, in particular the support platform thereof, has a concentric window, which is inversely mounted under the confocal Raman microscopy device.

The actuator stage of the indenter device preferably is fixedly arranged relative to the sample holder device and configured for shifting the indenter tip relative to the sample holder device, in particular relative to the sample accommodated by the sample holder device, along a linear shifting axis, preferably perpendicular to the surface of the support platform. Particularly preferred, the actuator stage comprises a piezo-electric actuator and transducer, which has advantages in terms of quantity and time control of the applied load. Advantageously, the actuator stage may be configured for indenter tip displacements with resolution step size down to 5 nm. The indenter tip is made of a non-deformable material, e. g. hard ceramics such as diamond.

By shifting the indenter tip toward the sample holder device, in particular the support platform thereof, it is brought in contact with and pressed against the sample so that the mechanical load is applied to the sample. By shifting with the opposite direction, the load can be reduced until zero (release of the sample). Due to the tip shape of the indenter tip, the direct application of the load is localized to a point-shaped contact section of the indenter tip with the sample. The contact section provides the indentation zone, and the load axis (axis of exerting force onto the sample) is the shifting axis of the indenter tip.

The confocal Raman microscopy device generally comprises a light source device, like e. g. a laser source, for creating excitation light, imaging optics for directing the excitation light to the sample, focusing the excitation light in a selectable sample depth, and collecting Raman scattering light from the sample, and a spectrally resolving detector device, e. g. a spectrometer, for detecting the Raman scattering light. The imaging optics may be configured for relaying the excitation light in free space and/or in a light guide.

The imaging axis (probing direction) is provided by the direction of irradiating the sample with the imaging optics. The imaging axis coincides with the load axis, i. e. both axes are preferably identical, or they are parallel with a distance at the location of applying the load, such that the distance has a neglectable influence on the measurement result to be obtained. Coinciding axes can be provided by adjusting at least one of the imaging optics and the actuator stage. Preferably, the imaging axis is perpendicular to the surface of the support platform, in particular perpendicular to the surface of the sample arranged on the support platform.

The calculation device for calculating at least one strain parameter comprises a computer circuit, optionally being included in a control device of the strain measurement apparatus.

The inventive arrangement of the sample holder device, the indenter device and the confocal Raman microscopy device comprises setting the sample holder device and/or the indenter device such that the sample holder device is in the load application position, i. e. the advancing indenter tip is able to hit the sample. Simultaneously, the inventive arrangement of the sample holder device, the indenter device and the confocal Raman microscopy device comprises setting the sample holder device and/or the confocal Raman microscopy device such that the imaging optics is capable of directing the excitation light to the sample on the support platform, in particular to the indentation zone of the sample, and collecting Raman scattering light from the sample, in particular from the indentation zone of the sample. Advantageously, the at least one Raman spectrum can be collected, when the sample holder device is in the load application position, in particular when the sample resting on the sample holder device is capable of receiving the localized mechanical load, e. g. a static load or a dynamically changing load.

In contrast with the conventional techniques (e. g. [7]), the inventive technique aligns the indentation direction (load axis) with Raman microscopy (in-line imaging axis) and co-localizes the loading spot and contact zone, so that the quantity (single value) and optionally a 1D-, 2D- or 3D-distribution of the induced contact strains/stresses under elastic-inelastic deformations can be determined. Changes in the molecular vibrational bands in the indentation zone of the sample are measured by Raman spectroscopy with improved precision. In particular, the invention allows real-time loading and measurement of the induced contact strain/stress fields with submicron spatial resolution in Raman active and preferably laser transparent and/or sufficiently thin materials. Advantageously, with the inventive arrangement of the indenter device and the confocal Raman microscopy device with coinciding load axis and imaging axis, the limitations of the off-axis technique (e. g. [8]) are excluded. Furthermore, with the inventive arrangement of the confocal Raman microscopy device, collecting the at least one Raman spectrum is possible during and/or after the application of load without moving the sample, so that strain measurement is executed exactly in the indentation zone. In particular, a sample recovery can be measured during load reduction.

According to a preferred embodiment of the invention, the sample holder device, the indenter device and the confocal Raman microscopy device are arranged such that the confocal Raman microscopy device is capable of collecting the at least one Raman spectrum simultaneously with the application of the localized mechanical load. In terms of the method, the at least one Raman spectrum preferably is collected simultaneously with the step of applying the localized mechanical load, i. e. during the application of load. Advantageously, the at least one strain parameter is estimated without being influenced by relaxation processes after load application. Alternatively or in addition, the at least one Raman spectrum may be collected before and/or after applying the localized mechanical load.

According to a particularly preferred embodiment of the invention, the indenter device, in particular at least the indenter tip thereof, and the confocal Raman microscopy device, in particular at least a portion of the imaging optic thereof, are arranged on opposite sides of the sample holder device, in particular on opposite sides of the support platform of the sample holder device, so that the localized mechanical load can be applied at a loading spot on a first side of the sample and the at least one Raman spectrum can be collected in the indentation zone, in particular at the loading spot from the a second, opposite side of the sample. In terms of the method, the localized mechanical load is preferably applied at a loading spot on a first side of the sample and the at least one Raman spectrum is collected at in the indentation zone, in particular at the loading spot from a second, opposite side of the sample. Advantageously, sufficient space is obtained for the indenter and confocal Raman microscopy devices (or components thereof) with the opposite arrangement thereof.

Applying load and collecting Raman scattering light from opposite sides preferably includes providing a vertical orientation of the load and imaging axes, applying the load along the direction of gravitation from above and collecting the at least one Raman spectrum from below of the support platform. Alternatively, applying the load parallel to the direction of gravitation from below and collecting the at least one Raman spectrum from above of the support platform may be provided.

According to a further preferred embodiment of the invention, the sample holder device is provided with a translation stage being arranged for adjusting an x-y-position of the sample holder device in a plane perpendicular to the imaging axis of the confocal Raman microscopy device. In terms of the method, an x-y-position of the sample holder device is preferably adjusted in a plane perpendicular to the imaging axis. Advantageously, the translation stage facilitates the adjustment of the sample relative to the load and imaging axes, thus allowing a two-dimensionally (in a plane parallel to the surface of the support platform) or a three-dimensionally scanning measurement by operating the translation stage.

Another particular advantage of the invention results if the confocal Raman microscopy device is configured for time-resolved collecting multiple Raman spectra, thus allowing an investigation of e. g. relaxation properties of the sample. Alternatively or in addition, mapping the sample in a range including the indentation zone can be provided. Advantageously, this mapping features provides additional reference information on the sample in a region with less strain or even without strain. For mapping the sample, an optics scanner device can be provided which is arranged for successively focusing the excitation light to different locations within the indentation zone and/or outside of the indentation zone.

According to a further advantageous embodiment of the invention, the indenter device comprises a load-cell being connected to the actuator stage and being arranged for measuring the mechanical load applied to the sample. In terms of the method, the mechanical load applied to the sample may be measured with the load-cell being connected to the actuator stage. Advantageously, the load-cell allows determining a correlation of the at least one collected Raman spectrum and/or the at least one strain parameter with the quantity of load applied to the sample. Furthermore, the load-cell can be used for a load control, and/or the load can be applied according to a predetermined time function, thus allowing the calculation of the at least one strain parameter according to a given test protocol.

Advantageously, various features of the indenter tip are available for improving the strain measurement. Preferably, the indenter tip has a distal contact section being exposed for contacting the sample and having a dimension below 1 $\mu$m. Alternatively, larger dimensions are possible, e. g. in a range from 1 $\mu$m to 1 mm or up to 3 mm or even 5 mm. Due to the small dimension of the contact section, the application of high external pressures and the position resolved measurement can be improved in an advantageous manner. Alternatively or in addition, the indenter tip may be exchangeable. Thus, adapting the measurement setup to a particular sample can be facilitated. Alternatively or in addition, the indenter tip may be a diamond tip. Diamond has a high hardness, so that it allows the measurement with nearly all sample materials of interest. Further indenter tip materials may comprises e. g. zirconia, sapphire, ruby or tungsten carbide. Alternatively or in addition, the indenter tip may be a cono-spherical tip. The cono-spherical shape has advantages for a homogeneous load application and development of strain in the sample. Alternatively, the indenter tip may have a tip geometry comprising a cube corner or a Berkovich geometry to further localize the stress concentrations or partially deform the sample in an inelastic manner. Further tip geometries may comprise e. g. a Vickers geometry or a flat punch geometry.

The tip can be changed to install one of different tip geometries and/or materials. The tip dimension and contact radius may vary as well. In practice, the tip is selected in dependency on measuring conditions, e. g. sample size, sample hardness or sample structure. For example, a cono-spherical tip may have a radius from 300 nm up to some mm ranges, while a cube corner may have a tip dimension of about 70 to 100 nm, and a Berkovich tip may have a tip dimension of about 120 nm.

Features disclosed in the context of the strain measurement apparatus and embodiments thereof also represent preferred features of the inventive strain measurement method and embodiments thereof. The aforementioned aspects and inventive and preferred features, in particular with regard to the configuration of the apparatuses as well as the dimensions and compositions of individual components being described in relation to the apparatuses, also apply for the methods. The preferred embodiments, variants and features of the invention described above are combinable with one another as desired.

Brief description of the drawings

Further advantages and details of the invention are described in the following with reference to the attached drawings, which schematically show in:

Figure 1: features of the strain measurement apparatus according to preferred embodiments of the invention;

Figures 2 and 3: further features of the strain measurement apparatus of Figure 1;

Figure 4: scanning configurations using the strain measurement method according to preferred embodiments of the invention; and

Figure 5: experimental results of in-situ Raman indentation investigations in point measurement mode under incremental loads.

Detailed description of preferred embodiments of the invention

Embodiments of the invention are described in the following with particular reference to the arrangement of a sample holder device, an indenter device and a confocal Raman microscopy device of an in-situ strain measurement apparatus and the operation thereof. The invention preferably is implemented with a confocal Raman microscope as it is known per se, e. g. for strain measurements. Accordingly, details of the confocal Raman microscope, the available control schemes thereof and available schemes of Raman signal acquisition are not described as far as they are known from prior art.

Calculating the at least one strain parameter is preferably executed on the basis of the collected at least one Raman spectrum and at least one measured load quantity as it is known per se from conventional Raman based strain measurements. In particular, it comprises a signal assessment of the at least one Raman spectrum, correlating features of the at least one Raman spectrum, like a band peak position and/or a band width and/or changes thereof, with a deformation quantity, e. g. the indenter tip displacement, and analytically or numerically calculating the at least one stress or strain parameter from the load and deformation quantities. Calculating the at least one stress or strain parameter may comprise calculating one single stress or strain parameter, like localized strain, as a single value, or calculating multiple stress or strain parameters, as maps and/or time functions.

Generally, the sample includes a solid Raman active material, like a ceramic or a plastic. Reference is made in an exemplary manner to a plate shaped sample, which preferably is transparent in a wavelength range of the confocal Raman microscope, in particular at a probe light wavelength of the light source thereof and at Raman scattered light wavelengths. The wavelength range of the confocal Raman microscope extends e. g. from about 400 nm to 1.5 $\mu$m. The transparent sample has a thickness in a range of e. g. 10 $\mu$m (supported with a laser transparent back plate, like quartz) to 5 mm (standalone). It is noted that the optical transparency is not a necessary feature of the sample. Without optical transparency, the strain measurement may be restricted to a thin samples with a thickness in a range of e. g. 10 $\mu$m to 100 $\mu$m (for example for tooth enamel).

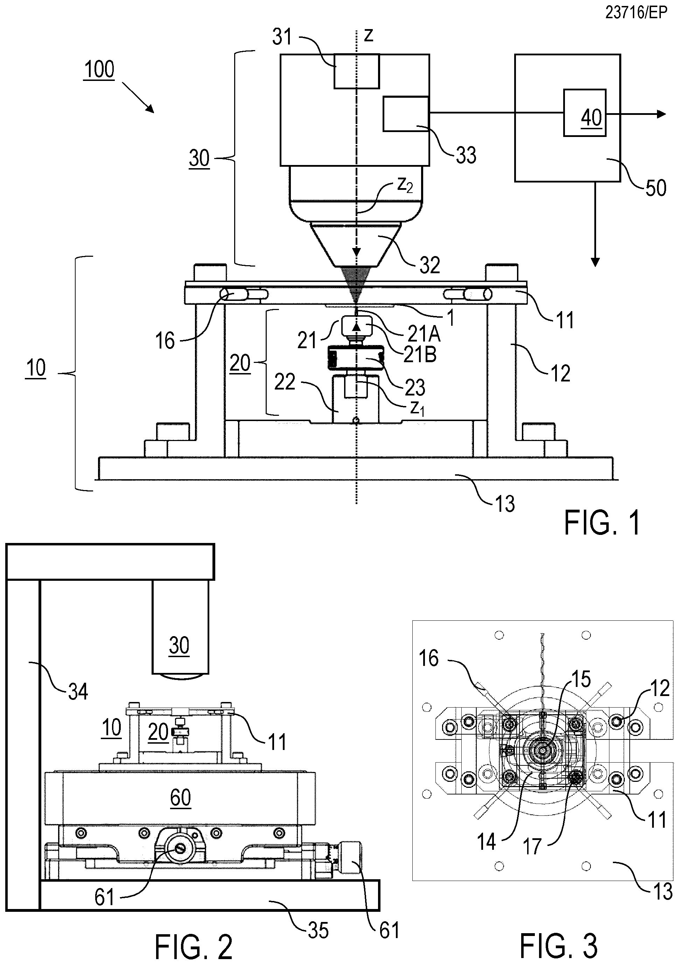

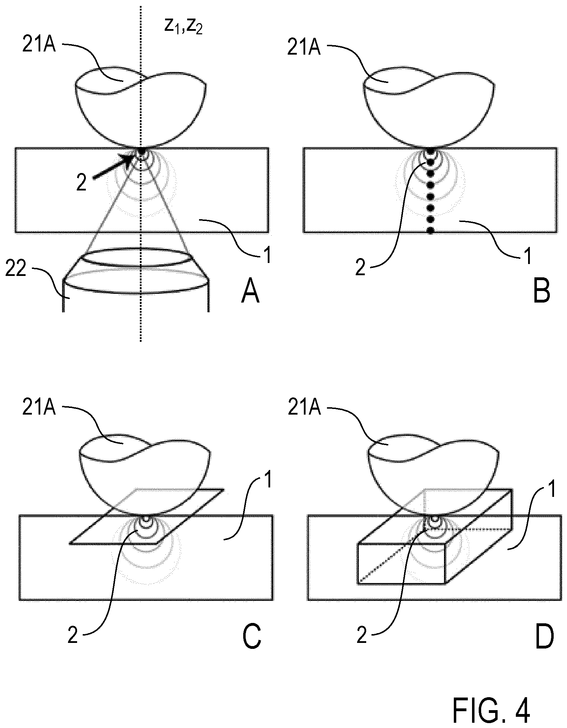

Figure 1 schematically illustrates a side view of an embodiment of the strain measurement apparatus 100 for measuring mechanical strain in a sample 1. The strain measurement apparatus 100 comprises the sample holder device 10, the indenter device 20 with an indenter tip 21 and an actuator stage 22, the confocal Raman microscope 30 and a calculation device 40, which is included in a control device 50, like e. g. a control computer. A load axis $z_1$ of the indenter device 20, in particular of the indenter tip 21 thereof, and an imaging axis $z_2$ of the confocal Raman microscope 30 commonly extend along the vertical z-axis. The sample holder device 10 is adapted for arranging the sample in a plane perpendicular to the load and imaging axes, in particular in a horizontal x-y-plane. Figure 2 additionally illustrates a preferred translation stage 60 for adjusting a position of the sample holder device 10 and the indenter device 20 relative to the confocal Raman microscopy device 30 and/or for scanning the sample for measuring a sample map (see Figure 4). Details of the sample holder device 10 are shown in a top view of Figure 3.

The sample holder device 10 comprises a support platform 11 extending in the horizontal x-y-plane for accommodating the sample 1. The support platform 11 is mounted via four support columns 12 on a support plate 13 (see Figures 1 and 3). Preferably, the support platform 11 comprises an adjustable sample holder frame 14 with a central laser probing window 15 for passing probe light and collecting at least one Raman spectrum. The sample 1 can be fixed on a surface of the sample holder frame 14. The position of the sample holder frame 14 in the x-y-plane can be adjusted via sample adjustment knobs 16. With the arrangement of the sample 1 in the sample holder frame 14, the sample holder device 10 is in the load application position, wherein the clamped sample 1 will be exposed to the indenter tip (from the lower surface) and light/laser (from the upper side). The sample adjustment knobs 16 are provided for positioning of the sample 1 relative to the load and imaging axes $z_1$, $z_2$. A scanning movement of the sample in the x-y-plane may be provided with the translation stage 60. Accordingly, the contact zone/area in the sample 1 can be scanned through the light/laser probing window 15 by operating the translation stage 60 in the x-y-plane, and the measuring depth in the sample 1 can be scanned by operating the translation stage 60 in the z-direction and/or by shifting a focus of the confocal Raman microscopy device 30 along the z-axis.

The indenter device 20 comprises the indenter tip 21, the actuator stage 22 and a load-cell 23. The indenter tip 21 has a cono-spherical rigid tip section 21A (see Figure 4) which is made of e. g. diamond, and a tip support body section 21B. The setup allows a replacement of different indenter tips with different sizes and geometries which are adapted for forming and applying different stress fields. The actuator stage 22 is a piezoelectric actuator, which is supported by the support plate 13 and/or the translation stage 60, and which is capable of applying displacements with a minimum step size of e. g. 5 nm and maximum applied load of e. g. 20 N. The load-cell 23 is arranged between the actuator stage 22 and the tip support body section 21B for measuring a load applied to the sample 1. In particular, the load-cell 23 may have a reading resolution of e. g. 0.01 N and maximum load of e. g. 20 N, and it is connected to a shank of the piezo-electric actuator. The load-cell 23 is connected with the control device 50 for analyzing the load-cell output and optionally for providing a loop control of the actuator stage 22 in dependency on the load-cell output.

The confocal Raman microscope 30 preferably comprises a microscope body 34 with an oscillation damping microscope base plate 35, e. g. made of granite (schematically shown in Figure 2), and it is provided with a light source device 31, imaging optics 32 and a detector device 33. The light source device 31 is e. g. a laser ($\lambda$ = 488 nm, 532 nm, 633 nm, or 785 nm). The detector device 33 is connected with the calculation device 40. The confocal Raman microscope 30 is e. g. a confocal Raman microscope (like e. g. the WITec Alpha 300R, manufacturer WiTec, Germany). Preferably, the confocal Raman microscope 30 is provided with a conventional confocal microscope imaging section allowing a microscope imaging of the sample for visually monitoring it.

The translation stage 60 is fixedly arranged on the microscope base plate 35 for supporting the sample holder device 10 and adjusting a position of the sample holder device 10 in the x-y-plane and adjusting the load axis $z_1$ of the indenter tip 21. Furthermore, the translation stage 60 is configured for adjusting a position of the sample holder device 10 along the z-direction, i. e. for adjusting a focus position of the confocal Raman microscope 30 in the sample 1 along the z-direction. The adjustments may be executed by motorized actors and/or by manually driven micrometer screw gauges 61.

The indenter device 20 is mounted inversely under the confocal Raman microscope 30 with the sample 1 therebetween (see Figure 1) for applying a given load (exerted by a displacement of the indenter tip 21) to the sample 1. The load induces a change in vibrational bands of Raman signals, in particular in at least one Raman spectrum of the sample, collected with the confocal Raman microscope 30. This change will be filtered and mapped to evaluate the induced elastic strains/stresses of the sample 1 by the calculation device 40. As the indenter device 20 and the confocal Raman microscope 30 are arranged with coinciding load and imaging axes $z_1$, $z_2$, the confocal Raman microscopy device 30 is capable of collecting the at least one Raman spectrum free of interferences, while the sample holder device 10 is in the load application position and even during the application of load.

As alternatives to the illustrated embodiment, the arrangement of the indenter device 20 and the confocal Raman microscope 30 can be reversed, wherein the confocal Raman microscopy device 30 is mounted inversely under the indenter device 20 with the sample 1 therebetween, or the coinciding load and imaging axes can be declined relative to the vertical z-axis.

For the inventive strain measurement, the strain measurement apparatus 100 is preferably operated as follows. Prior to the strain measurement, the x-y-position of the indenter tip 21 can be adjusted using the micrometer screw gauges 61 of the translation stage 60 (see Figure 2). After mounting the sample 1 on the support platform 11 of the sample holder device 10, the region of interest (ROI) can be selected using the sample adjustment knobs 16, while the sample 1 is monitored with the microscope imaging section of the confocal Raman microscopy device 30. Subsequently, the position of the sample can be fixed using sample holder grip screws 17 (see Figure 3). As a preliminary reference measurement, vibrational bands of the molecular structure of the sample in a non-loaded condition can be acquired with the confocal Raman microscope 30 prior to the indentation. Features of the vibrational bands can be used as reference for the subsequent strain measurement.

The strain measurement comprises the step of applying a localized mechanical load to the sample 1 with the indenter tip 21 of the indenter device 20. The indenter tip 21 is displaced until a contact with the sample 1 is reached and the indentation zone 2 is formed (see Figure 4). With the further displacement of the indenter tip 21 a load is applied to the sample 1, so that elastic and/or inelastic deformations are induced at the indentation zone 2, i. e. in the direct contact zone and in adjacent regions of the sample 1.

Furthermore, the strain measurement comprises the step of collecting at least one Raman spectrum in the indentation zone 2 with the confocal Raman microscopy device 30. Simultaneously with the application of the load, the confocal Raman microscopy device 30 is used for collecting the at least one Raman spectrum. Calculating at least one strain parameter from the at least one Raman spectrum comprises filtering the collected at least one Raman spectrum of the probed zone e. g. for selected peak positions and/or band widths, and correlating it with the indentation data (load, displacement, and/or contact geometry) with the calculation device 40. Correlations between the feature of the at least one Raman spectrum and induced strains/stresses yield the at least one strain parameter to be obtained.

By collecting and evaluating a single spectrum, a 0-dimensional map of the sample is obtained, resulting in a single strain value (see Figure 4A). Preferably, multiple Raman spectra are collected while the indentation zone 2 is scanned by operating the translation stage 60 to acquire the vibrational bands of the molecular structure of the sample 1 in and/or around the indentation zone 2 with local resolution. Accordingly, a 1-, 2- or 3-dimensional map of the sample can be obtained, as schematically illustrated with a line scan, an area scan and a volume scan in Figures 4B to 4D. The line scan of Figure 4B preferably provides a depth profiling of the strain in the sample. Alternatively, other directions of the line scan can be set. Additionally, the mapping as shown in Figures 4A to 4D can be executed with time resolution, e. g. with repeated collections and evaluations of Raman spectra.

In summary, to conduct time-resolved three-dimensional mapping of the localized strains/ stresses using the confocal Raman microscope 30, two key elements are combined. Firstly, the pointed micro- or nanoindenter (the indenter tip 21) with controllable displacement or load forms a localized contact stress field. This task cannot be fulfilled by conventional micro-tension or -bending testers, since the applied stress fields are not localized and/or are not fully accessible to the laser for scanning the stress/strain zone. Secondly, the confocal Raman microscope 30 and the calculation device 40 provide the at least one strain parameter, preferably with a spatial resolution for mapping the indentation area. Combining the Raman microscopy device 30 with the translation stage 60 advantageously provides a submicron scanning resolution in x-, y-, and z-directions.

Optionally, the probing spatial resolution can be increased by selecting an objective lens of the imaging optics 32 with larger numerical aperture (NA) and a laser with shorter wavelength ($\lambda$). Accordingly, using for instance a 532 nm laser of the light source device 31 and an objective lens with a NA = 0.9, the spatial resolution ($0.61^*\lambda / NA$) can go down to 360 nm. In addition, and to detect the changes in the vibrational bands of the sample 1 exposed to the external force, the detector device 33 of the confocal Raman microscope 30 shall be provided with a spectrometer, preferably with a high resolution in Raman shift ($\leq 1$ cm$^{-1}$). This resolution can be adjusted e. g. by selecting a high grating number (>1800 g/mm) and a large focal distance (>300 mm), which are accessible in available confocal Raman microscopes.

As an example, by applying and controlling the displacement of the indenter tip 21 using the piezo actuator of the actuator stage 22, through the diamond tip with a known geometry, and recording the resultant loads using the load-cell 23, the applied Hertzian contact stress $\sigma$ at the contact point can be obtained from the following equations:

$$\sigma \approx \frac{P}{\pi R h}$$

wherein P is the load, R is the radius of the indenter tip 21, and h is the applied contact depth (displacement into the sample 1). By collecting the Raman spectra from the loaded sample 1 and comparing them with the spectra of the unloaded state, any changes in the vibrational bands can be achieved and be used for correlating the induced peaks shifts and applied contact stresses. In particular, the contact stress can be calculated with the above equation on the basis of the measured load, the known radius and the contact depth derived from the induced peak shifts.

The application of the invention is not restricted to the determination of the Hertzian contact stress as a strain parameter. Alternatively, any correlation between the applied force or pressure and changes in vibrational bands of a Raman active material scan be calculated, in particular in real time and/or in time-resolved fashion.

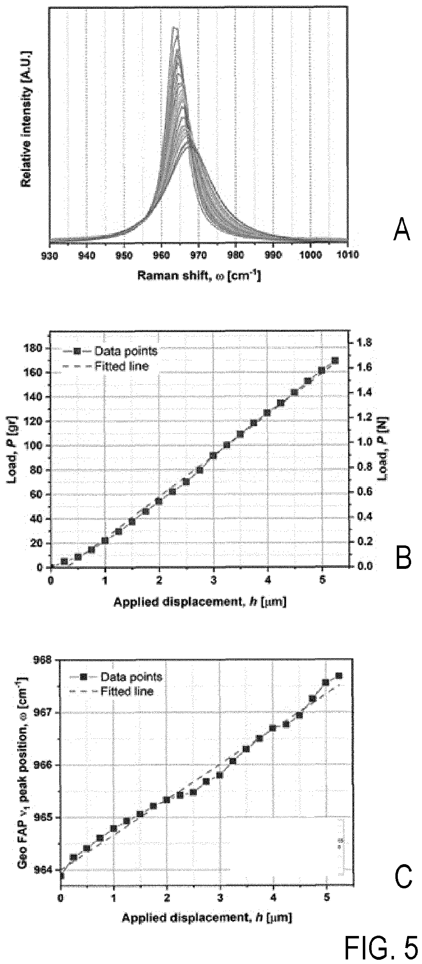

With practical tests, the inventors have employed the inventive strain measurement apparatus 100 and method to investigate the induced strain/stresses and Raman peak shifts for series of point measurements, area scans, and 3D mapping (stacks of area scans to attain a volumetric data) on a geological fluorapatite sample (thickness: 1 mm) under different contact loads. As an example, Figure 5 illustrates test results of the in-situ Raman indentation in point measurement mode under incremental loads (0 to 170 g). According to Figure 5A, the extracted Raman peaks for the $v_1$ vibrational band of the phosphate group of fluorapatite at the contact point of the indentation zone reveal changes in the peak position and width Figure 5B shows the measured load in dependency of the applied displacement of the indenter tip 21. The linear behavior of the extracted load-displacement curve indicates an elastic response of the sample. Accordingly, a correlation of Raman peak change (induced peak shift) and applied displacement (contact depth) can be obtained as shown in Figure 5C. This correlation is used for calculating the strain parameter (Hertzian contact stress)

With further tests, in-situ Raman indentation in area scan (2D) mode under a constant load of 1.28 N or 1.45 N allowed a characterization of the stress distribution around the indentation zone and/or at different depths in the sample.

The features of the invention disclosed in the above description, the drawings and the claims can be of significance both individually as well as in combination or sub-combination for the realization of the invention in its various embodiments. The invention is not restricted to the preferred embodiments described above. Rather a plurality of variants and derivatives is possible which also use the inventive concept and therefore fall within the scope of protection. In addition, the invention also claims protection for the subject and features of the subclaims independently of the features and claims to which they refer.

**Claims**

1. Strain measurement apparatus (100), being configured for measuring mechanical strain in a sample (1), comprising

   - a sample holder device (10) being arranged for accommodating the sample (1) to be investigated,
   - an indenter device (20) including an indenter tip (21) and an actuator stage (22) carrying the indenter tip (21), wherein the actuator stage (22) is arranged for an application of a localized mechanical load along a load axis ($z_1$) via the indenter tip (21) at an indentation zone (2) of the sample (1) accommodated by the sample holder device (10), when the sample holder device (10) is in a load application position,
   - a confocal Raman microscopy device (30) having an imaging axis ($z_2$) and being arranged for collecting at least one Raman spectrum in the indentation zone (2) of the sample (1), and
   - a calculation device (40) being arranged for calculating at least one strain parameter based on the at least one Raman spectrum,

   **characterized in that**

   - the sample holder device (10), the indenter device (20) and the confocal Raman microscopy device (30) are arranged such that the confocal Raman microscopy device (30) is capable of collecting the at least one Raman spectrum, while the sample holder device (10) is in the load application position, and
   - the indenter device (20) and the confocal Raman microscopy device (30) are arranged such that the load axis ($z_1$) of the actuator stage (22) and the imaging axis ($z_2$) of the confocal Raman microscopy device (30) coincide.

2. Strain measurement apparatus according to claim 1, wherein

   - the sample holder device (10), the indenter device (20) and the confocal Raman microscopy device (30) are arranged such that the confocal Raman microscopy device (30) is capable of collecting the at least one Raman spectrum simultaneously with the application of the localized mechanical load.

3. Strain measurement apparatus according to one of the foregoing claims, wherein

   - the indenter device (20) and the confocal Raman microscopy device (30) are arranged on opposite sides of the sample holder device (10), so that the localized mechanical load can be applied at a loading spot on a first side of the sample (1) and the at least one Raman spectrum can be collected in the indentation zone (2), in particular at the loading spot from the second, opposite side of the sample (1).

4. Strain measurement apparatus according to one of the foregoing claims, wherein

   - the sample holder device (10) is provided with a translation stage (60) being arranged for adjusting an x-y-position of the sample holder device (10) in a plane perpendicular to the imaging axis ($z_2$) of the confocal Raman microscopy device (30).

5. Strain measurement apparatus according to one of the foregoing claims, wherein

   - the confocal Raman microscopy device (30) is configured for at least one of time-resolved collecting multiple Raman spectra and mapping the sample (1) in a range including the indentation zone (2).

6. Strain measurement apparatus according to one of the foregoing claims, comprising at least one of the features

   - the indenter tip (21) has a distal contact section being exposed for contacting the sample (1),
   - the indenter tip (21) is exchangeable,
   - the indenter tip (21) is a diamond tip or a sapphire tip or a ruby tip,
   - the indenter tip (21) is a cono-spherical tip, and
   - the indenter tip (21) has a tip geometry comprising a cube corner or a Berkovich geometry or a Vickers geometry or a flat punch geometry.

7. Strain measurement apparatus according to one of the foregoing claims, comprising at least one of the features

   - the actuator stage (22) comprises a piezo-electric actuator and transducer,
   - the indenter device (20) comprises a load-cell (23) being connected to the actuator stage (22) and being arranged for measuring the mechanical load applied to the sample (1), and
   - the sample holder device (10) has a concentric window, which is inversely mounted under the confocal Raman microscopy device (30).

8. Strain measurement method for measuring mechanical strain in a sample (1), comprising the steps

   - arranging the sample (1) to be investigated on a sample holder device (10),
   - applying a localized mechanical load to the sample (1) with an indenter device (20) including an indenter tip (21) and an actuator stage (22) carrying the indenter tip (21), wherein the mechanical load is applied with the actuator stage (22) along a load axis ($z_1$) via the indenter tip (21) at an indentation zone (2) of the sample (1), when the sample holder device (10) is in a load application position,
   - collecting at least one Raman spectrum in the indentation zone (2) of the sample (1) with a confocal Raman microscopy device (30) having an imaging axis ($z_2$), and
   - calculating at least one strain parameter based on the at least one Raman spectrum,

**characterized in that**

   - the at least one Raman spectrum is collected, while the sample holder device (10) is in the load application position, and
   - the indenter device (20) and the confocal Raman microscopy device (30) are arranged such that the load axis ($z_1$) of the actuator stage (22) and the imaging axis ($z_2$) of the confocal Raman microscopy device (30) coincide.

9. Strain measurement method according to claim 8,

   - the at least one Raman spectrum is collected simultaneously with the step of applying the localized mechanical load.

10. Strain measurement method according to one of the claims 8 to 9,

   - the at least one Raman spectrum is collected before and/or after the step of applying the localized mechanical load.

11. Strain measurement method according to one of the claims 8 to 10,

   - the localized mechanical load is applied at a loading spot on a first side of the sample (1) and the at least one Raman spectrum is collected at in the indentation zone (2), in particular at the loading spot from a second, opposite side of the sample (1).

12. Strain measurement method according to one of the claims 8 to 11, comprising

   - adjusting an x-y-position of the sample holder device (10) in a plane perpendicular to the imaging axis of the confocal Raman microscopy device (30).

**13.** Strain measurement method according to one of the claims 8 to 12, comprising at least one of

- time-resolved collecting multiple Raman spectra, and
- mapping, preferably three-dimensionally mapping, the sample (1) in a range including the indentation zone (2).

**14.** Strain measurement method according to one of the claims 8 to 13, further comprising

- measuring the mechanical load applied to the sample (1) with a load-cell (23) being connected to the actuator stage (22).

23716/EP

FIG. 1

FIG. 2

FIG. 3

FIG. 4

FIG. 5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GERBIG Y B ET AL: "In-situ Raman spectroscopic measurements of the deformation region in indented glasses", JOURNAL OF NON-CRYSTALLINE SOLIDS, NORTH-HOLLAND PHYSICS PUBLISHING. AMSTERDAM, NL, vol. 530, 23 December 2019 (2019-12-23), - 23 December 2019 (2019-12-23), XP085994579, ISSN: 0022-3093, DOI: 10.1016/J.JNONCRYSOL.2019.119828 [retrieved on 2019-12-23] * the whole document * | 1-14 | INV. G01N3/06 G01N3/42 |
| X | WO 96/10737 A1 (RENISHAW PLC [GB]; SUISSE ELECTRONIQUE MICROTECH [CH] ET AL.) 11 April 1996 (1996-04-11) * figure 10 * | 1-14 | |
| X | RU 2 680 853 C1 (FEDERALNOE GOSUDARSTVENNOE BYUDZHETNOE NAUCHNOE UCHREZHDENIE TEKH INST) 28 February 2019 (2019-02-28) * figure 7 * * paragraph [0051] - paragraph [0054] * * paragraph [0040] * | 1-14 | TECHNICAL FIELDS SEARCHED (IPC) G01N |
| X | WO 97/03346 A1 (RENISHAW PLC [GB]; PITT GILLIES DAVID [GB]; HAYWARD IAN PAUL [GB]) 30 January 1997 (1997-01-30) * figures 1, 2 * | 1-14 | |
| X | JP 2017 146294 A (AIST; UNIV HOKKAIDO) 24 August 2017 (2017-08-24) * paragraph [0027] - paragraph [0031] * | 1-14 | |

-/--

The present search report has been drawn up for all claims

| Place of search | Date of completion of the search | Examiner |
|---|---|---|
| The Hague | 22 September 2022 | Cantalapiedra, Igor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 17 2138

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 783 541 B1 (KOREA RES INST STANDARDS & SCI [KR]) 11 October 2017 (2017-10-11) * paragraph [0038] - paragraph [0041] * | 1-14 | |
| A | MOHAMMED AHMED SAMEER KHAN ET AL: "Interface graphitization of carbon-carbon composites by nanoindentation", CARBON, vol. 150, 31 December 2019 (2019-12-31), pages 425-435, XP085717560, ISSN: 0008-6223, DOI: 10.1016/J.CARBON.2019.05.038 * the whole document * | 1-14 | |
| A | ZHU WENLIANG ET AL: "Raman spectroscopic studies of stress-induced structure alteration in diamond-like carbon films", DIAMOND AND RELATED MATERIALS, vol. 94, 16 February 2019 (2019-02-16), pages 1-7, XP085661461, ISSN: 0925-9635, DOI: 10.1016/J.DIAMOND.2019.02.020 * the whole document * | 1,8 | TECHNICAL FIELDS SEARCHED (IPC) |
| A | JP H01 189544 A (SHIMADZU CORP) 28 July 1989 (1989-07-28) * the whole document * | 1,8 | |

The present search report has been drawn up for all claims

| Place of search | Date of completion of the search | Examiner |
|---|---|---|
| The Hague | 22 September 2022 | Cantalapiedra, Igor |

EPO FORM 1503 03.82 (P04C01)

EP 4 273 533 A1

## ANNEX TO THE EUROPEAN SEARCH REPORT
## ON EUROPEAN PATENT APPLICATION NO.

EP 22 17 2138

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2022

| Patent document cited in search report | | Publication date | Patent family member(s) | | Publication date |
|---|---|---|---|---|---|
| WO 9610737 | A1 | 11-04-1996 | EP | 0731908 A1 | 18-09-1996 |
| | | | WO | 9610737 A1 | 11-04-1996 |
| RU 2680853 | C1 | 28-02-2019 | NONE | | |
| WO 9703346 | A1 | 30-01-1997 | NONE | | |
| JP 2017146294 | A | 24-08-2017 | JP | 6755475 B2 | 16-09-2020 |
| | | | JP | 2017146294 A | 24-08-2017 |
| KR 101783541 | B1 | 11-10-2017 | NONE | | |
| JP H01189544 | A | 28-07-1989 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Measurement. **A. M. KORSUNSKY.** A Teaching Essay on Residual Stresses and Eigenstrains. Butterworth-Heinemann, 2017
- **W. ECKER et al.** Nanoscale evolution of stress concentrations and crack morphology in multilayered CrN coating during indentation: Experiment and simulation. *Materials & Design,* 2020, vol. 188, 108478
- **A. J.G. LUNT et al.** A review of micro-scale focused ion beam milling and digital image correlation analysis for residual stress evaluation and error estimation. *Surface and Coatings Technology,* 2015, vol. 283, 373-388

- **C. GAMMER et al.** Measurement of local strain. *MRS Bulletin,* 2019, vol. 44 (6), 459-464
- **J. GIM et al.** Nanoscale deformation mechanics reveal resilience in nacre of Pinna nobilis shell. *Nat Commun,* 2019, vol. 10, 4822
- **A. ZEILINGER et al.** In-situ Observation of Cross-Sectional Microstructural Changes and Stress Distributions in Fracturing TiN Thin Film during Nanoindentation. *Scientific Reports,* 2016, vol. 6, 22670
- **P. MANIMUNDA et al.** *Chem. Commun.,* 2019, vol. 55, 9200-9203
- **H. C. LOH et al.** *Commun Mater,* 2020, vol. 1, 77